# EUROPÄISCHE PATENTSCHRIFT

(11) **EP 4 491 807 B1**
(45) Veröffentlichungstag und Bekanntmachung des Hinweises auf die Patenterteilung: **09.12.2026**
(21) Anmeldenummer: 23185406.8
(22) Anmeldetag: 13.07.2023
(51) Int. Cl.: E02F 3/34, A01B 59/06, E02F 3/36, E02F 3/627

(54) **VERFAHREN ZUM AUTOMATISCHEN KOPPELN EINES FRONTLADERS MIT EINEM ARBEITSFAHRZEUG, AUTOMATISCHE FRONTLADERKOPPLUNGSEINRICHTUNG, ARBEITSFAHRZEUG UND ARBEITSFAHRZEUGSYSTEM**
METHOD FOR AUTOMATICALLY COUPLING A FRONT LOADER TO A WORK VEHICLE, FRONT LOADER COUPLING DEVICE, WORK VEHICLE AND WORK VEHICLE SYSTEM
PROCÉDÉ DE COUPLAGE AUTOMATIQUE D'UN CHARGEUR FRONTAL AVEC UN VÉHICULE DE TRAVAIL, DISPOSITIF DE COUPLAGE DE CHARGEUR FRONTAL AUTOMATIQUE, VÉHICULE DE TRAVAIL ET SYSTÈME DE VÉHICULE DE TRAVAIL

(43) Veröffentlichungstag der Anmeldung: 15.01.2025
(73) Patentinhaber: Wilhelm Stoll Maschinenfabrik GmbH, 38268 Lengede/Broistedt (DE)
(72) Erfinder: Flötzinger, Ulrich, 59846 Sundern (Sauerland) (DE); Bastian, Arne, 38667 Bad Harzburg (DE)
(74) Vertreter: REHBERG HÜPPE + PARTNER

(56) Entgegenhaltungen:
- EP-B1- 1 458 938
- WO-A1-02/088477
- US-A1- 2005 172 795
- US-A1- 2012 027 551
- US-A1- 2020 347 573

## Beschreibung

### TECHNISCHES GEBIET DER ERFINDUNG

Arbeitsfahrzeuge, insbesondere Traktoren, die mit einem Frontlader ausgestattet sind, finden Einsatz in der Landwirtschaft oder im kommunalen Bereich zum Heben, Senken und Transportieren von Lasten. Ein Traktor mit angebautem Frontlader kann die Funktion eines Radladers erfüllen.

Bekannte Frontlader verfügen über eine Schwinge, die eine Säule aufweist, die an einer Anbaukonsole, insbesondere an einem Anbauturm, eines Arbeitsfahrzeugs montiert werden kann. In dem der Säule abgewandten Endbereich der Schwinge verfügt der Frontlader über eine Werkzeugaufnahme, über die der Frontlader lösbar mit einem Werkzeug, beispielsweise einer Mistgabel, einer Schaufel, einer Palettengabel, einer Gabel mit Schwerlastzinken, einer Rundballengabel oder einem Rübenkorb, koppelbar ist. Möglich ist auch, dass an dem Frontlader ein einen Arbeitshub ausführendes Werkzeug, insbesondere eine Schneidzange, ein Kistendrehgerät, ein Greifwerkzeug (bspw. ein Folienballengreifwerkzeug, ein Festmistgreifwerkzeug oder ein Stammholzgreifwerkzeug), befestigt werden kann.

Herkömmliche Schwingen bestehen aus einem vorderen Holm und einem hinteren Holm. Die Holme werden von Stahlrohrprofilen gebildet, die unter einem Winkel in ihren einander zugewandten Endbereichen miteinander verschweißt werden. Über Hydraulikzylinder, deren hydraulische Beaufschlagung von dem Arbeitsfahrzeug bereitgestellt und gesteuert wird, kann einerseits ein Verschwenken des Frontladers um ein Schwenklager, welches zwischen der Säule und der Schwinge gebildet werden kann, und andererseits der Werkzeugaufnahme gegenüber der Schwinge gesteuert werden. Eine Steuerung der hydraulischen Beaufschlagung der Hydraulikzylinder kann durch den Fahrer durch eine Betätigung von Hebeln erfolgen. Alternativ kann die hydraulische Beaufschlagung der Hydraulikzylinder über einen Joystick oder einen Kreuzhebel gesteuert werden, wobei eine Bewegung des Joysticks oder Kreuzhebel nach vorne und hinten die Schwinge des Frontladers anheben und absenken kann, während eine Bewegung des Joysticks oder Kreuzhebels nach rechts und links den Schwenkwinkel der Werkzeugaufnahme gegenüber de Schwinge um eine Querachse verändert. Weitere Druck- und/oder Kippschalter können zusätzliche Funktionen, insbesondere eine Betätigung eines einen Arbeitshub ausführenden Werkzeugs, steuern.

Die hydraulische Beaufschlagung der Hydraulikzylinder erfolgt über Verbindungsleitungen zwischen dem Arbeitsfahrzeug und dem Frontlader, wobei das Hydraulikfluid über eine traktoreigene Hydraulikpumpe bereitgestellt wird. Das Hydrauliksystem kann vom Fahrersitz von dem Fahrer durch Bedienelemente wie Hebel, Schalter oder einen Joystick und mittels an dem Arbeitsfahrzeug vorgesehenen Steuereinrichtungen und/oder auch mittels Steuereinrichtungen, die an dem Frontlader angeordnet sind, gesteuert werden, wobei hierbei auch eine elektromagnetische Steuerung von Steuerventilen Einsatz findet. Die Verbindungsleitungen des Hydrauliksystems zwischen Arbeitsfahrzeug und Frontlader können über Anschlüsse einzeln gekoppelt sein oder es kann eine sogenannte "Multikupplung" Einsatz finden, über welche mehrere oder sämtliche Hydraulikanschlüsse gleichzeitig miteinander gekoppelt werden.

Die Werkzeugaufnahme kann als sogenannter Euro-Schnellwechselrahmen oder als Werkzeugaufnahme gemäß einer der Normen EN 12525 oder ISO 24410 ausgebildet sein.

Einsatz finden auch automatische Kopplungseinrichtungen, über welche die Kopplung der Werkzeugaufnahme mit dem Werkzeug und dessen Verriegelung herbeigeführt werden kann, ohne dass der Fahrer die Fahrerkabine verlassen muss.

Als Parallelführung ausgebildete Koordinierungseinrichtungen können dazu genutzt werden, die hydraulischen Beaufschlagungen des Hydraulikzylinders zum Heben und Senken der Schwinge sowie des Hydraulikzylinders zum Verschwenken der Werkzeugaufnahme gegenüber der Schwinge derart miteinander zu koordinieren, dass sich während des Hebens und Senkens der Schwinge der Winkel zwischen der Werkzeugaufnahme und dem Boden nicht oder nur innerhalb enger Grenzen ändert.

In diesem technischen Gebiet betrifft die Erfindung einen Frontlader für ein Arbeitsfahrzeug, ein Arbeitsfahrzeug mit einer Anbaukonsole für eine Kopplung des Arbeitsfahrzeugs mit einem Frontlader und ein Arbeitsfahrzeugsystem, welches ein Arbeitsfahrzeug und einen Frontlader aufweist.

### STAND DER TECHNIK

Das Patent DE 10 2005 048 280 B4 der Anmelderin offenbart allgemeinen, im Rahmen der Erfindung einsetzbaren Stand der Technik bezüglich von dem Fahrer betätigbaren Ventilen des Arbeitsfahrzeugs zur Steuerung der hydraulischen Beaufschlagung der Hydraulikzylinder des Frontladers, zusätzlichen Magnetventilen und hydraulischen Kopplungseinrichtungen für die Kupplung von Verbindungsleitungen zwischen Arbeitsfahrzeug und Frontlader.

Die Offenlegungsschrift DE 10 2005 053 041 A1 der Anmelderin offenbart allgemeinen, im Rahmen der Erfindung einsetzbaren Stand der Technik hinsichtlich eines Frontladers mit einer Säule, starr miteinander verbundenen Holmen und einer Werkzeugaufnahme sowie zwei Hydraulikzylindern einerseits zum Heben und Senken der Schwinge und andererseits zum Verschwenken der Werkzeugaufnahme. Der Frontlader verfügt über eine über einen weiteren Hydraulikzylinder ausklappbare Abstellstütze. In einem ausgefahrenen Zustand der Abstellstütze kann der Frontlader auf der Werkzeugaufnahme oder einem daran gehaltenen Werkzeug wie einer Schaufeln und der Abstellstütze abgestellt werden, wobei sich der Schwerpunkt des Frontladers mit Werkzeug zwischen den Abstellorten auf dem Boden befindet, aber sich der Frontlader auch über den Zwischenraum zwischen den Abstellorten hinaus erstrecken kann für eine gute Zugänglichkeit der Säule, um das Koppeln der Säule mit der Anbaukonsole des Arbeitsfahrzeugs zu ermöglichen.

Das Patent DE 10 2009 046 213 B4 der Anmelderin offenbart allgemeinen, im Rahmen der Erfindung einsetzbaren Stand der Technik zur Gestaltung einer Werkzeugaufnahme gemäß ISO 24410 und eines Verriegelungsmechanismus zum Verriegeln des Werkzeugs in der Werkzeugaufnahme.

Das Patent EP 1 813 730 B1 der Anmelderin offenbart allgemeinen, im Rahmen der Erfindung einsetzbaren Stand der Technik zur Gestaltung eines Hydrauliksystems zum Ansteuern eines Frontladers und zu einer Druckregelung in dem Hydrauliksystem.

Das Patent EP 1 903 147 B1 der Anmelderin offenbart allgemeinen, im Rahmen der Erfindung einsetzbaren Stand der Technik zur geometrischen Gestaltung der Holme einer Schwinge eines Frontladers und der Integration der Betätigungskinematik des Frontladers mit den Hydraulikzylindern in den Frontlader.

Das Patent EP 2 840 186 B1 der Anmelderin offenbart allgemeinen, im Rahmen der Erfindung einsetzbaren Stand der Technik zur Gestaltung einer Anbaukonsole, hier in Ausgestaltung mit einem sogenannten Knochen, und für die Gestaltung einer Rast- oder Verriegelungseinrichtung zur Verriegelung der Säule des Frontladers an der Anbaukonsole.

Das Patent EP 3 158 842 B1 offenbart im Rahmen der Erfindung einsetzbare Gestaltungsmöglichkeiten für eine Anbaukonsole des Arbeitsfahrzeugs, die hier von zwei Anbautürmen auf beiden Seiten des Arbeitsfahrzeugs gebildet ist, welche sich in Längsrichtung erstreckende plattenförmige Rahmenelemente und sich vertikal erstreckende Halterungen mit einem endseitigen Knochen aufweisen.

Das Patent EP 3 431 668 B1 der Anmelderin offenbart allgemeinen, im Rahmen der Erfindung einsetzbaren Stand der Technik für die Gestaltung einer Teilverkleidung des Frontladers zum Abdecken bewegter Komponenten, insbesondere einer Steuerstange.

Die Patentanmeldung EP 4 144 925 A1 der Anmelderin offenbart weitere, im Rahmen der Erfindung einsetzbare Möglichkeiten für die Gestaltung einer Anbaukonsole in Form eines Anbauturms, wobei hier der Anbauturm zumindest teilweise mittels Massivumformen hergestellt ist.

Die Webseite
https://youtu.be/JchP-UKsL84 (Datum der Einsichtnahme: 12.07.2023)
offenbart einen Frontlader, bei dem der hintere, dem Arbeitsfahrzeug zugewandte Holm der Schwinge teleskopierbar ist. Dieser Frontlader ist auch auf der Website www.Ifprototipi.com/portfolio-type/caricatore-frontale-telescopico-brevettato dargestellt und (unter Bezugnahme auf eine erfolgte Patentierung) beschrieben.

Die Website
https://www.google.de/search?q=Hydac+frontlader+automatisches+Einfahren& source=lmns&tbm=vid&bih=937&biw=1920&hl=de&sa=X&ved=2ahUKEwi3m7_ blYaAAxWGi_0HHRJZBkAQ_AUoA3oECAEQAw#fpstate=ive&vld=cid:92c6fae 2,vid:UYI9QZt1peM
(Datum der Einsichtnahme 12.07.2023)
offenbart ein Verfahren zum automatischen Koppeln eines Frontladers mit einem als Traktor ausgebildeten Arbeitsfahrzeug. Mit dem Annähern des Arbeitsfahrzeugs an den über Abstellstützen auf dem Boden abgestellten Frontlader tritt eine Säule des Frontladers von vorne in eine Anbaukonsole des Arbeitsfahrzeugs ein. Eine fixierende Verriegelung der Säule des Frontladers an der Anbaukonsole wird manuell durch den Fahrer aus der Kabine ausgelöst. Die Verriegelung erfolgt über einen Verriegelungshaken, der mittels eines Aktuators um eine Fahrzeugquerachse verschwenkt wird und ein Verriegelungselement der Säule des Frontladers hintergreift.

US 2012/0027551 A1 beschreibt eine automatische mechanische Kopplung einer Anbaukonsole eines Traktors mit einer Säule eines Frontladers, die herbeigeführt wird durch eine Fahrbewegung des Traktors in Richtung des Frontladers. Alternativ kann dann, wenn der Traktor mit der Anbaukonsole eng benachbart zu der Säule des Frontladers angeordnet ist und bereits eine hydraulische Verbindung zwischen dem Traktor und dem Frontlader hergestellt worden ist, die mechanische Verbindung durch hydraulische Beaufschlagung eines Stellzylinders des Frontladers erfolgen, womit eine für die automatische mechanische Kopplung erforderliche Bewegung der Säule in Richtung der Anbaukonsole herbeigeführt werden kann. Für die mechanische Verbindung wird zunächst ein starr im unteren Endbereich an der Säule befestigter Querbolzen an einem Abstützpunkt an eine hakenförmige Aufnahme der Anbaukonsole zur Anlage gebracht. Eine Schwenkbewegung um diesen Abstützpunkt wird dann durch eine Fahrbewegung des Traktors oder hydraulische Beaufschlagung eines Stellzylinders des Frontladers herbeigeführt, bis eine Verriegelungsbohrung der Säule fluchtend zu einer Verriegelungsbohrung der Anbaukonsole angeordnet ist. In der fluchtenden Stellung der Verriegelungsbohrungen wird automatisch ein Verriegelungsbolzen von einer entriegelten Stellung in eine verriegelte Stellung bewegt. Hierzu ist der Verriegelungsbolzen in Querrichtung verschieblich an der Säule gehalten und über eine Sicherungseinrichtung zunächst in seiner entriegelten Stellung gehalten. Die Sicherungseinrichtung kann bewegungsgesteuert durch die Relativbewegung zwischen Säule und Anbaukonsole entriegelt werden, womit der Verriegelungsbolzen durch eine Feder von der entriegelten Stellung in die verriegelte Stellung bewegt wird. Soll der Frontlader von dem Traktor gelöst werden, muss der Verriegelungsbolzen manuell entgegen der Wirkung der Feder von der verriegelten Stellung in die entriegelte Stellung zurückbewegt werden und in der verriegelten Stellung wieder mittels der Sicherungseinrichtung verriegelt werden. Anstelle der Betätigung des Verriegelungsbolzens mittels einer Feder kann der Verriegelungsbolzen auch hydraulisch, elektrisch, pneumatisch, elektromechanisch, mittels eines Schrittmotors oder eines beliebigen anderen elektrischen Motors betätigt werden.

US 2005/0172795 A1 offenbart eine zweiteilige Anbaukonsole eines Traktors, die ein festes Anbaukonsolenteil aufweist, welches an dem Rahmen des Traktors befestigt ist und ein verschwenkbares Anbaukonsolenteil aufweist, welches verschwenkbar gegenüber dem festen Anbaukonsolenteil gelagert ist. Das verschwenkbare Anbaukonsolenteil verfügt über einen Aufnahmeschlitz, welcher in nicht gekoppeltem Zustand des Frontladers nach vorne offen ist, geringfügig nach oben geneigt ist und ein Kupplungsmaul bildet. Die Säule verfügt über einen starr an der Säule befestigten Querbolzen. Wird der Traktor an den Frontlader angenähert, kann der Querbolzen in das Kupplungsmaul eintreten und mit zunehmendem Eintritt in das Kupplungsmaul das verschwenkbare Anbaukonsolenteil verschwenken, bis das Kupplungsmaul vertikal orientiert ist, womit der Querbolzen an dem Boden des Kupplungsmauls nach unten abgestützt ist. In dieser Betriebsstellung wird das verschwenkbare Anbaukupplungsteil in einer vertikalen Längsebene mittels eines Verriegelungshakens mit dem festen Anbaukonsolenteil verriegelt, womit eine starre Befestigung des Frontladers an dem Traktor herbeigeführt ist. An der Säule und dem festen Anbaukonsolenteil sind jeweils starr Kopplungsblöcke gehalten, die mit der Verschwenkung des verschwenkbaren Anbaukonsolenteils mit einer Schwenkbewegung miteinander gekoppelt werden. Hierbei erfolgt einerseits eine mechanische Kopplung der Kopplungsblöcke, indem ein Zentrierbolzen des Kopplungsblocks der Säule eintritt in eine Zentrierbohrung des Kopplungsblocks des festen Anbaukonsolenteils. Andererseits erfolgt auch eine hydraulische Kopplung von Hydraulikleitungen, indem hydraulische Kopplungsstecker des Kopplungsblocks des festen Anbaukonsolenteils eintreten in Steckeraufnahmen des Kopplungsblocks der Säule. Die derart geschaffenen Hydraulikverbindungen ermöglichen die hydraulische Betätigung von hydraulischen Stellzylindern des Frontladers über einen von dem Traktor bereitgestellten hydraulischen Steuerdruck. Die Kopplungsblöcke verfügen über abgewinkelte Kontakt- und Führungsflächen, über welche eine steife Lagefixierung der Kopplungsblöcke relativ zueinander erfolgt. US 2005/0172795 offenbart auch eine Abstellstütze des Frontladers.

Gemäß WO 02/088477 A1 verfügt eine Anbaukonsole eines Traktors über zwei in Fahrtrichtung voneinander beabstandete und in unterschiedlichen Höhen angeordnete Kupplungsmäuler, in welche starre Kupplungszapfen einer Säule eines Frontladers bei der Annährung des Traktors an den Frontlader eintreten. Ein Schwenkriegel der Anbaukonsole ist mittels eines hydraulischen Stellzylinders verschwenkbar. Der Schwenkriegel weist eine Nockenfläche auf, die gewährleistet, dass mit der Verschwenkung des Schwenkriegels die Säule mit den Kupplungszapfen vollständig bis zum Boden in die Kupplungsmäuler hineinbewegt wird und am Ende der Schwenkbewegung der Austritt der Kupplungszapfens aus den Kupplungsmäulern blockiert ist. Eine hydraulische Kopplung zwischen Traktor und Frontlader erfolgt hier über die hydraulische Kupplung eines fest an der Säule gehaltenen Kupplungsteils mit Steckkupplungen mit einem an der Anbaukonsole gehaltenen Kupplungsteiles mit entsprechenden Steckkupplungen. Hierbei sind die Kupplungsteile des Traktors über Schraubenfedern an einem Gestell der Anbaukonsole begrenzt axial verschieblich abgestützt. Da die Kupplungsteile an dem Gestell in einer Bohrung mit einem Übermaß abgestützt sind, sind die Kupplungsteile auch begrenzt verschwenkbar an dem Gestell der Anbaukonsole gehalten. Vor der Betätigung des Schwenkriegels sind die Kupplungsteile des Frontladers und des Traktors nicht oder lediglich teilweise miteinander gekuppelt. Erst das Heranziehen der Säule an die Anbaukonsole mittels des Schwenkriegels führt die hydraulische Kupplung herbei. WO 02/088477 A1 offenbart auch, dass auf ähnliche Weise eine automatische Kupplung elektrischer Leitungen erfolgen kann.

EP 1 458 938 B1 beschreibt eine Weiterentwicklung von WO 02/088477 A1, gemäß welcher zusätzlich zu den Kupplungsteilen die Kupplungsteile radial umgebende Führungshülsen Einsatz finden. Die der Anbaukonsole zugeordneten Steckkupplungen sind mit den zugehörigen Führungshülsen jeweils zu einer mit Spiel in einem Gestell gehaltenen Baueinheit zusammengefasst, die über eine Rückstellfeder im Gestell zentriert gehalten wird und gegen die Kraft der Rückstellfeder verschwenkt und radial verlagert werden kann, um Winkel- bzw. Fluchtungsfehler beim Kuppeln ausgleichen zu können. Die Führungslänge der Führungshülsen oder Führungsstifte ist dabei größer als der Kupplungsweg der Steckkupplungen, sodass die Herstellung der mechanischen Verbindung über die Führungshülsen oder Führungsstifte und eine damit herbeigeführte Zentrierung vor der hydraulischen Verbindung der Steckkupplungen erfolgt. Für eine alternative Ausführungsform können die Steckkupplungen der Anbaukonsole zu einer Baueinheit zusammengefasst sein, indem die Steckkupplungen in einen gemeinsamen Träger eingeschraubt werden. In diesem Fall erfolgt eine Führung mittels Führungsstiften, die führende Aufnahme in entsprechenden Führungsbohrungen finden.

Die nicht gattungsgemäße Druckschrift US 2020/0347573 A1 offenbart die Befestigung eines Werkzeugs an einem Tragarm, der wiederum mit einem Rahmen eines Kettenfahrzeugs gekoppelt ist. Der Tragarm verfügt im Bereich seiner Längserstreckung mittig zwischen dem Werkzeug und der Anlenkung an dem Rahmen des Kettenfahrzeugs über ein Lagerauge, über welches der Tragarm mit einem hydraulisch angehobenen und abgesenkten Liftarm gekoppelt werden kann, so dass das Anheben des Liftarms zur Anhebung des Tragarms und damit des Werkzeugs führt. Hierbei sind der Tragarm einerseits und der Liftarm andererseits separat voneinander an dem Kettenfahrzeug angelenkt, wobei der Tragarm im vorderen, unteren Endbereich des Kettenfahrzeugs angelenkt ist, während der Liftarm im hinteren, oberen Endbereich des Kettenfahrzeugs angelenkt ist. Für die Ermöglichung einer Montage und Demontage des Liftarms von dem Tragarm kann ein in dem Lagerauge aufgenommener Schwenkbolzen mittels eines Aktuators in das Lagerauge hinein und aus diesem heraus bewegt werden.

### AUFGABE DER ERFINDUNG

Der Erfindung liegt die Aufgabe zugrunde,
- ein Verfahren zum automatischen Koppeln eines Frontladers mit einem Arbeitsfahrzeug,
- eine automatische Frontladerkopplungseinrichtung,
- ein Arbeitsfahrzeug und
- ein Arbeitsfahrzeugsystem
vorzuschlagen, welches oder welche
- eine automatische Kopplung ermöglicht und/oder vereinfacht und/oder
- hinsichtlich der Sicherheit der automatischen Kopplung verbessert ist und/oder
- hinsichtlich der Zuverlässigkeit verbessert ist und/oder
- hinsichtlich der Bedienung
verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Zur Lösung der der Erfindung zugrunde liegenden Aufgabe wird ein Verfahren zum automatischen Koppeln eines Frontladers mit einem Arbeitsfahrzeug vorgeschlagen, bei dem zunächst ein Annähern des Arbeitsfahrzeugs durch Fahren desselben in eine Fahrtrichtung an einen vorzugsweise auf dem Boden und/oder über Abstellstützen abgestellten Frontlader erfolgt. Am Ende dieser Annäherungsbewegung kommt ein Anschlag einer Säule des Frontladers zur Anlage an eine Konsolenaufnahme einer Anbaukonsole des Arbeitsfahrzeugs. Damit ist eine definierte Relativstellung von Anlenkorten des Arbeitsfahrzeugs, hier der Anbaukonsole, und des Frontladers, hier der Säule, zumindest in Fahrtrichtung des Arbeitsfahrzeugs erreicht. In dem erfindungsgemäßen Verfahren erfolgt dann in dieser definierten Relativstellung eine Bewegung eines Verriegelungselements der Anbaukonsole des Arbeitsfahrzeugs von einer entriegelten Stellung in eine verriegelte Stellung. Die Bewegung des Verriegelungselements erfolgt dabei quer zur Fahrtrichtung, insbesondere in die Fahrzeugquerrichtung. In der entriegelten Stellung befindet sich das Verriegelungselement außer Eingriff mit einer Verriegelungsausnehmung der Säule des Frontladers. Hingegen greift das Verriegelungselement in der verriegelten Stellung in die Verriegelungsausnehmung der Säule ein. Auf diese Weise kann eine erste Teilbefestigung zwischen dem Frontlader und dem Arbeitsfahrzeug bereitgestellt werden, die noch einen Freiheitsgrad, insbesondere einen Schwenkfreiheitsgrad, belässt, oder es erfolgt bereits eine vollständige Befestigung und Verriegelung. Die Bewegung des Verriegelungselements von der entriegelten Stellung in die verriegelte Stellung kann beispielsweise mittels einer Feder herbeigeführt werden, die beispielsweise während der Annäherungsbewegung gespannt wird und deren Energie dann freigegeben wird, wenn das Verriegelungselement fluchtend zu der Verriegelungsausnehmung angeordnet ist. Vorzugsweise erfolgt die Bewegung des Verriegelungselements von der entriegelten Stellung in die verriegelte Stellung mittels eines Aktuators, der beispielsweise als hydraulischer oder elektrischer Aktuator ausgebildet sein kann. Möglich ist auch, dass die Bewegung des Verriegelungselements in eine Richtung (also von der entriegelten Stellung in die verriegelte Stellung oder von der verriegelten Stellung in die entriegelte Stellung) mittels eines Aktuators gegen die Beaufschlagung einer Feder erfolgt, während die Bewegung in die andere Richtung dann durch die Feder verursacht wird.

Im Rahmen der Erfindung kann die Verriegelungsausnehmung beliebig ausgebildet sein und einen beliebigen Querschnitt aufweisen. Erfindungsgemäß ist das Verriegelungselement als Verriegelungsbolzen ausgebildet, während die Verriegelungsausnehmung als Verriegelungsbohrung ausgebildet sein kann. Für diese Ausgestaltungen ist eine kostengünstige, aber zuverlässige Bereitstellung des Verriegelungselements und der Verriegelungsausnehmung möglich. Der Verriegelungsbolzen und die Verriegelungsbohrung können einen über die Längsachsen derselben konstanten Querschnitt aufweisen. Möglich ist aber auch, dass der Verriegelungsbolzen und/oder die Verriegelungsbohrung eine den Eintritt des Verriegelungsbolzens in die Verriegelungsbohrung vereinfachende (beispielsweise konusförmige) Einführschräge aufweisen/aufweist.

Möglich ist, dass mit dem Eingriff des Verriegelungselements in die Verriegelungsausnehmung bereits eine Fixierung der Säule an der Anbaukonsole erfolgt ist. Möglich ist aber auch, dass mit diesem Eingriff lediglich eine Reduzierung der Freiheitsgrade zwischen der Säule und der Anbaukonsole erfolgt. Für einen Vorschlag der Erfindung wird der Eingriff des Verriegelungselements in die Verriegelungsausnehmung als Führung für eine Relativbewegung zwischen der Anbaukonsole des Arbeitsfahrzeugs und der Säule des Frontladers verwendet. Ist das als Verriegelungsbolzen ausgebildete Verriegelungselement aufgenommen in einer als Verriegelungsbohrung ausgebildeten Verriegelungsausnehmung, kann auf diese Weise ein Schwenklager gebildet sein, um welches eine relative Verschwenkung der Säule gegenüber der Anbaukonsole erfolgen kann. Dieser verbleibende Freiheitsgrad kann dann durch zusätzliche Maßnahmen, insbesondere einen weiteren Eingriff eines weiteren Verriegelungselements in eine weitere Verriegelungsausnehmung, beseitigt werden.

Für eine Weiterbildung des erfindungsgemäßen Verfahrens ist neben dem genannten Verriegelungselement auch ein weiteres Verriegelungselement vorhanden. Das weitere Verriegelungselement ist ebenfalls quer zur Fahrtrichtung bewegbar von einer entriegelten Stellung in eine verriegelte Stellung. In der entriegelten Stellung ist das weitere Verriegelungselement nicht im Eingriff mit einer weiteren Verriegelungsausnehmung der Säule des Frontladers. Hingegen greift das weitere Verriegelungselement in der verriegelten Stellung in die weitere Verriegelungsausnehmung der Säule ein. Während grundsätzlich möglich ist, dass die beiden Verriegelungselemente gleichzeitig beispielsweise mittels eines gemeinsamen Aktuators oder mittels separater Aktuatoren betätigt werden, ist vorzugsweise das weitere Verriegelungselement unabhängig von dem Verriegelungselement bewegbar. Dies hat zur Folge, dass nicht gleichzeitig gewährleistet werden muss, dass die beiden Verriegelungselemente und die zugeordneten beiden Verriegelungsausnehmungen fluchtend zueinander angeordnet sind. Vielmehr kann zunächst ein Verriegelungselement fluchtend zu der zugeordneten Verriegelungsausnehmung angeordnet werden und eine Verriegelung dieses Verriegelungselements herbeigeführt werden, womit dann eine erste Verbindung geschaffen sein kann, die noch einen Freiheitsgrad belässt, der genutzt wird, um dann unabhängig und zu einem späteren Zeitpunkt ein Fluchten des anderen Verriegelungselements mit der zugeordneten Verriegelungsausnehmung herbeizuführen. Hierbei ist möglich, dass die beiden Verriegelungselemente über separate Aktuatoren von der entriegelten Stellung in die verriegelte Stellung bewegt werden.

Für eine weitere Ausbildung des erfindungsgemäßen Verfahrens erfolgt mit dem Annähern des Arbeitsfahrzeugs bis zur Anlage des Anschlags einer Säule des Frontladers an die Konsolenaufnahme der Anbaukonsole des Arbeitsfahrzeugs bewegungsgesteuert durch die Fahrbewegung des Arbeitsfahrzeugs auch eine Verbindung von zwei hydraulischen und/oder elektrischen Leitungskopplungseinrichtungen. Hierbei ist eine der Leitungskopplungseinrichtungen an der Anbaukonsole gehalten, während die andere Leitungskopplungseinrichtung an der Säule gehalten ist. Die Verbindung der beiden Leitungskopplungseinrichtungen miteinander mit dem Annähern des Arbeitsfahrzeugs an den Frontlader ermöglicht eine Übertragung hydraulischer Fluide und/oder elektrischer Signale zwischen dem Arbeitsfahrzeug und der Anbaukonsole, wobei es sich vorzugsweise um Betriebssignale für den Frontlader, insbesondere hydraulische Drücke zur Betätigung von hydraulischen Stellzylindern, Messsignale von Sensoren des Frontladers und/oder elektrische Steuersignale für einen elektrischen Antrieb des Frontladers, handeln kann.

Möglich ist, dass die Beaufschlagung des Aktuators zur Überführung des Verriegelungselements von der entriegelten Stellung in die verriegelte Stellung über die miteinander bewegungsgesteuert durch die Annäherung miteinander gekoppelten Leitungskopplungseinrichtungen erfolgt.

Wie zuvor erläutert, kann mit der Annäherung des Arbeitsfahrzeugs an den Frontlader, verursacht durch die Fahrbewegung des Arbeitsfahrzeugs allein, gewährleistet werden, dass die beiden Verriegelungselemente fluchtend zu den zugeordneten Verriegelungsausnehmungen angeordnet sind. Für ein besonderes erfindungsgemäßes Verfahren erfolgt nach dem Bewegen des Verriegelungselements in die verriegelte Stellung, womit infolge der Ausbildung des Verriegelungselements als Verriegelungsbolzen und bei Ausbildung der Verriegelungsausnehmung als Verriegelungsbohrung eine Schwenkachse vorgegeben ist, und nach der Verbindung der beiden Leitungskopplungseinrichtungen miteinander über die Leitungskopplungseinrichtungen eine Beaufschlagung mindestens eines Aktuators des Frontladers. Diese Beaufschlagung des Aktuators des Frontladers hat zur Folge, dass sich der relative Schwenkwinkel der Säule gegenüber der Anbaukonsole um die von dem Verriegelungselement bereitgestellten Schwenkachse verändert, bis ein weiterer Anschlag der Säule des Frontladers zur Anlage an eine weitere Konsolenaufnahme der Anbaukonsole des Arbeitsfahrzeugs kommt. In dieser Schwenkstellung ist dann das weitere Verriegelungselement fluchtend zu einer weiteren Verriegelungsausnehmung der Säule angeordnet. Das weitere Verriegelungselement kann dann in Fahrzeugquerrichtung von der entriegelten Stellung in die verriegelte Stellung bewegt werden. Durch den Eingriff der beiden Verriegelungselemente in die zugeordneten Verriegelungsausnehmungen kann dann eine starre und betriebssichere Kopplung des Frontladers mit dem Arbeitsfahrzeug gewährleistet werden. Bei dem beaufschlagten Aktuator, der diese Verschwenkung um die von dem Verriegelungselement bereitgestellten Schwenkachse herbeiführt, kann es sich um den das Heben und Senken der Schwinge herbeiführenden Aktuator, den die Werkzeugaufnahme verschwenkenden Aktuator und/oder einen Aktuator zum Ein- und Ausfahren von Abstellstützen handeln.

Im Rahmen der Erfindung wird unter einer "automatischen Kopplung" eine Kopplung zwischen dem Arbeitsfahrzeug und dem Frontlader verstanden, welche herbeigeführt werden kann, ohne dass der Fahrer das Arbeitsfahrzeug verlassen muss und manuell außerhalb des Fahrzeugs auf eine Frontladerkopplungseinrichtung einwirken muss. Die automatische Kopplung wird dabei vorzugsweise
- durch den Antrieb des Arbeitsfahrzeugs in Fahrrichtung,
- durch eine Betätigung von Bedienelementen durch den Fahrer in der Fahrerkabine,
- durch Sensoren und/oder
- bewegungsgesteuert und/oder
- manuell von dem Fahrer aus der Fahrerkabine und/oder
- anhand von durch Signale der Sensoren und/oder Schalter und/oder eine Steuereinrichtung mit Steuerlogik betätigte Aktuatoren
herbeigeführt.

Eine weitere Lösung der der Erfindung zugrunde liegenden Aufgabe stellt eine automatische Frontladerkopplungseinrichtung dar, die an dem Arbeitsfahrzeug angeordnet oder ausgebildet ist und einer automatischen Kopplung des Frontladers mit dem Arbeitsfahrzeug dient, wozu vorzugsweise ein Verfahren Einsatz findet, wie dieses zuvor erläutert worden ist. Die erfindungsgemäße Frontladerkopplungseinrichtung verfügt dabei über eine Anbaukonsole, die zwei Konsolenaufnahmen aufweist. Mindestens eine Konsolenaufnahme ist in Fahrtrichtung des Arbeitsfahrzeugs offen, so dass mit der Bewegung des Arbeitsfahrzeugs in Fahrtrichtung ein Anschlag in die Konsolenaufnahme eintreten kann. Die Anbaukonsole verfügt des Weiteren über ein Verriegelungselement, welches als Verriegelungsbolzen ausgebildet ist. Das Verriegelungselement ist in eine Fahrzeugquerrichtung verschieblich geführt. Die Anbaukonsole verfügt über einen Aktuator, über den das Verriegelungselement von der nicht verriegelten Stellung in die verriegelte Stellung in Fahrzeugquerrichtung bewegbar ist. Kumulativ möglich ist, dass die Frontladerkopplungseinrichtung und hier insbesondere die Anbaukonsole eine elektrische und/oder hydraulische Leitungskopplungseinrichtung aufweist, die für eine Verbindung mit einer entsprechenden elektrischen und/oder hydraulischen Leitungskopplungseinrichtung des Frontladers dient. Die Leitungskopplungseinrichtung weist elektrische und/oder hydraulische Kontakte auf.

Die Kontakte der Leitungskopplungseinrichtung können mit einem Längsfreiheitsgrad, einem Querfreiheitsgrad und/oder einem Schwenkfreiheitsgrad abgestützt sein. Möglich ist dabei, dass die Kontakte einzeln oder gemeinsam über einen Trag- und/oder Führungskörper mit mindestens einem der genannten Freiheitsgrade abgestützt sind.

Ein Längsfreiheitsgrad kann dabei genutzt werden, um eine Relativbewegung der Leitungskopplungseinrichtungen oder Kontakte in Fahrtrichtung auszugleichen. Ist der Längsfreiheitsgrad mit der Beaufschlagung einer Feder verbunden, kann bei der Bewegung entlang des Längsfreiheitsgrads mittels der Feder eine Anpresskraft erzeugt werden, welcher die elektrische Kontaktierung oder den hydraulischen Kontakt der beiden Leitungskopplungseinrichtungen gewährleistet.

Mittels eines Querfreiheitsgrads kann ein Ausgleich erfolgen, wenn die Längsachse des Arbeitsfahrzeugs und die Längsachse des Frontladers einen Versatz gegenüber einer idealen parallelen oder fluchtenden Anordnung aufweisen, der über den Querfreiheitsgrad ausgeglichen werden kann.

Der etwaige Schwenkfreiheitsgrad kann genutzt werden, wenn die beiden Leitungskopplungseinrichtungen und damit auch die Säule und die Anbaukonsole unter einem Winkel gegenüber der idealen Ausrichtung miteinander in Kontakt gebracht werden. Alternativ oder kumulativ möglich ist, dass der Schwenkfreiheitsgrad genutzt wird, wenn eine relative Verschwenkung der Säule gegenüber der Anbaukonsole im Rahmen des erfindungsgemäßen Verfahrens erfolgt mit der Verschwenkung um die durch das zuerst betätigte Verriegelungselement bereitgestellte Schwenkachse, um auch die fluchtende Stellung des zweiten Verriegelungselements mit der zugeordneten Verriegelungsausnehmung herbeizuführen. Es versteht sich, dass auch beliebige andere Freiheitsgrade der Leitungskopplungseinrichtung bzw. der Kontakte vorhanden sein können oder die Freiheitsgrade unter einem beliebigen Winkel gegenüber dem erläuterten Längsfreiheitsgrad oder Querfreiheitsgrad geneigt sein können.

Wie zuvor erwähnt können in der Frontladerkopplungseinrichtung Aktuatoren beliebiger Bauart Einsatz finden. So kann beispielsweise ein Verriegelungselement oder Verriegelungsbolzen mittels eines elektrischen Stellantriebs oder Linearantriebs bewegt werden. Für einen Vorschlag der Erfindung ist der Aktuator zur Betätigung des Verriegelungselements ein hydraulischer Aktuator. Grundsätzlich kann ein hydraulischer Aktuator eine Betätigungsstange aufweisen, an welcher dann das Verriegelungselement angeordnet ist oder getrieblich gekoppelt ist oder welche unmittelbar das Verriegelungselement ausbildet. Vorzugsweise verfügt der hydraulische Aktuator aber über ein Zylindergehäuse und einen relativ zu dem Zylindergehäuse je nach hydraulischer Beaufschlagung bewegten Kolben. Ist der Kolben in Betätigungsrichtung fest an der Anbaukonsole gehalten und wird das Zylindergehäuse hydraulisch bewegt, kann das Zylindergehäuse unmittelbar das Verriegelungselement ausbilden, wozu dieses vorzugsweise eine zylindrische Mantelfläche aufweist. Ist hingegen das Zylindergehäuse in Betätigungsrichtung fest an der Anbaukonsole gehalten und wird der Kolben hydraulisch bewegt, kann der Kolben unmittelbar das Verriegelungselement, insbesondere die Verriegelungsstange, ausbilden.

In der Praxis kann unter Umständen nicht gewährleistet werden, dass das Verfahren zum Koppeln bei idealer Relativstellung des Frontladers und des Arbeitsfahrzeugs erfolgt. Aus diesem Grund können die Aufnahmen, Führungen, Anschläge, Verriegelungselemente und/oder Verriegelungsausnehmungen unter Umständen auch ein Spiel gewährleisten, welche die zuverlässige Verbindung auch für Abweichungen von der idealen Relativstellung in Längsrichtung, in Querrichtung oder für unterschiedliche Winkel innerhalb eines vorgegebenen Bereichs ermöglichen. Für einen Vorschlag der Erfindung weisen/weist die Anbaukonsole und/oder die Säule mindestens eine Einführschräge auf. Die Einführschräge kann gewährleisten, dass bei einem Annähern des Arbeitsfahrzeugs an den Frontlader oder bei der Herstellung der Verbindung des Verriegelungselements mit der Verriegelungsausnehmung oder der relativen Verschwenkung der Säule gegenüber der Anbaukonsole mit einem Gleiten entlang der Einführschräge eine Korrektur der Relativstellung oder Ausrichtung erfolgt.

Die Schritte des erfindungsgemäßen Verfahrens können teilweise oder sämtlich manuell von dem Benutzer gesteuert oder eingeleitet werden. Möglich ist aber auch, dass die Schritte des erfindungsgemäßen Verfahrens teilweise oder sämtlich von einer elektronischen Steuereinheit gesteuert, geregelt oder eingeleitet werden. Für einen besonderen Vorschlag weist die Frontladerkopplungseinrichtung mindestens einen Sensor oder Schalter auf, welcher eine Relativstellung zwischen der Säule und der Anbaukonsole erfasst. Mittels des Sensors kann dann erkannt werden, wenn die Säule und die Anbaukonsole eine vorgegebene Relativstellung erreicht habe. Vorzugsweise detektiert ein Sensor oder Schalter unmittelbar oder mittelbar, wenn das Verriegelungselement fluchtend zu der zugeordneten Verriegelungsausnehmung angeordnet ist. Mit der Detektion kann dann der Aktuator betätigt werden, um das Verriegelungselement in die verriegelte Stellung zu überführen. Alternativ oder kumulativ kann derselbe Sensor oder Schalter oder ein anderer Sensor oder Schalter unmittelbar oder mittelbar detektieren, wenn das weitere Verriegelungselement fluchtend zu der zugeordneten weiteren Verriegelungsausnehmung angeordnet ist. Mit der Detektion kann dann der andere Aktuator betätigt werden, um das weitere Verriegelungselement in die verriegelte Stellung zu überführen.

Eine weitere Lösung der der Erfindung zugrunde liegenden Aufgabe stellt ein Arbeitsfahrzeug dar, welches mit einer Frontladerkopplungseinrichtung ausgestattet ist, wie diese zuvor erläutert worden ist.

Für eine weitere Lösung der der Erfindung zugrunde liegenden Aufgabe wird ein Arbeitsfahrzeugsystem vorgeschlagen, welches ein Arbeitsfahrzeug mit einer Frontladerkopplungseinrichtung aufweist. An der Frontladerkopplungseinrichtung und damit an dem Arbeitsfahrzeug ist dann ein Frontlader gehalten.

Vorzugsweise ist die erfindungsgemäße Lösung auch für existierende Frontlader und Arbeitsfahrzeuge nachrüstbar. Diese Nachrüstung kann erfolgen, indem ein herkömmliches Arbeitsfahrzeug mit einer erfindungsgemäßen Frontladerkopplungseinrichtung ausgestattet wird. Die Frontladerkopplungseinrichtung kann dabei auch ein automatisches Koppeln mit einem herkömmlichen Frontlader gewährleisten.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer teilgeschnittenen Seitenansicht einen Frontlader und einen Anbauturm eines Arbeitsfahrzeugs mit einer Frontladerkopplungseinrichtung, wobei der Anbauturm mit der Frontladerkopplungseinrichtung beabstandet von dem Frontlader angeordnet ist.
- **Fig. 2**: zeigt den Frontlader und den Anbauturm mit Frontladerkopplungseinrichtung gemäß Fig. 1, wobei hier der Frontlader über die Frontladerkopplungseinrichtung mit dem Anbauturm gekoppelt ist.
- **Fig. 3**: zeigt in einer Vorderansicht (bei Blickrichtung in Eintrittsrichtung der Säule des Frontladers in die Frontladerkopplungseinrichtung und entgegen der Fahrtrichtung) zwei auf beiden lateralen Seiten des Arbeitsfahrzeugs angeordnete Anbautürme mit Frontladerkopplungseinrichtungen.
- **Fig. 4**: zeigt einen Anbauturm mit Frontladerkopplungseinrichtung gemäß Fig. 1 bis 3 in einer Seitenansicht.

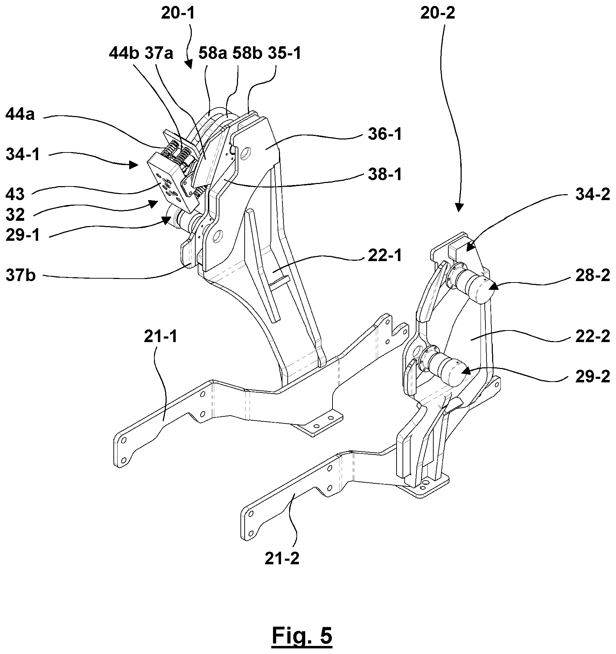

- **Fig. 5**: zeigt die Anbautürme mit Frontladerkopplungseinrichtungen gemäß Fig. 3 in einer räumlichen Ansicht schräg von oben und vorne.

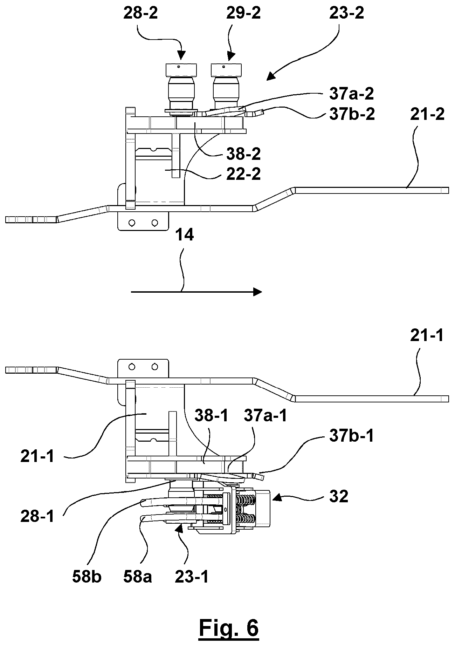

- **Fig. 6**: zeigt die Anbautürme mit Frontladerkopplungseinrichtungen gemäß Fig. 3 und 5 in einer Ansicht von oben.
- **Fig. 7**: zeigt in einer räumlichen Ansicht ein Detail des Anbauturms mit der Frontladerkopplungseinrichtung und einer Leitungskopplungseinrichtung sowie der Säule eines Frontladers mit einer daran gehaltenen Leitungskopplungseinrichtung, wobei hier ein Betriebszustand vor der Kopplung der Leitungskopplungseinrichtungen dargestellt ist.
- **Fig. 8**: zeigt eine räumliche Ansicht eines Details gemäß Fig. 7, wobei hier der gekoppelte Zustand dargestellt ist.
- **Fig. 9**: zeigt in einer geschnittenen Ansicht ein Verriegelungselement mit zugeordneter Verriegelungsausnehmung und einem Aktuator zur Überführung des Verriegelungselements von der entriegelten Stellung in die verriegelte Stellung, wobei sich das Verriegelungselement in der entriegelten Stellung befindet.
- **Fig. 10**: zeigt eine Ansicht entsprechend Fig. 9, wobei sich hier das Verriegelungselement in der verriegelten Stellung befindet.

### FIGURENBESCHREIBUNG

In den Figuren sind Bauelemente, Komponenten und Merkmale, die sich hinsichtlich ihrer Gestaltung und/oder Funktion entsprechen oder ähneln, teilweise mit denselben Bezugsnummern gekennzeichnet, wobei diese dann durch einen zusätzlichen Buchstaben a, b, ... voneinander unterschieden sein können. In diesem Fall kann auf die Bauelemente, Komponenten oder Merkmale mit oder ohne den ergänzenden Buchstaben Bezug genommen sein, womit dann eine, mehrere oder sämtliche mit diesen Bezugsnummern gekennzeichneten Komponenten, Bauelemente oder Merkmale angesprochen sein können.

An dem Arbeitsfahrzeug kann auf jeder Seite jeweils ein Anbauturm mit zugeordneter Frontladerkopplungseinrichtung angeordnet sein, der, die und deren oder dessen Komponenten im Folgenden auch durch den Zusatz "-1" und "-2" voneinander unterschieden sein können. Auf diese Bauelemente kann dann mit oder ohne den Zusatz "-1" bzw. "-2" Bezug genommen sein.

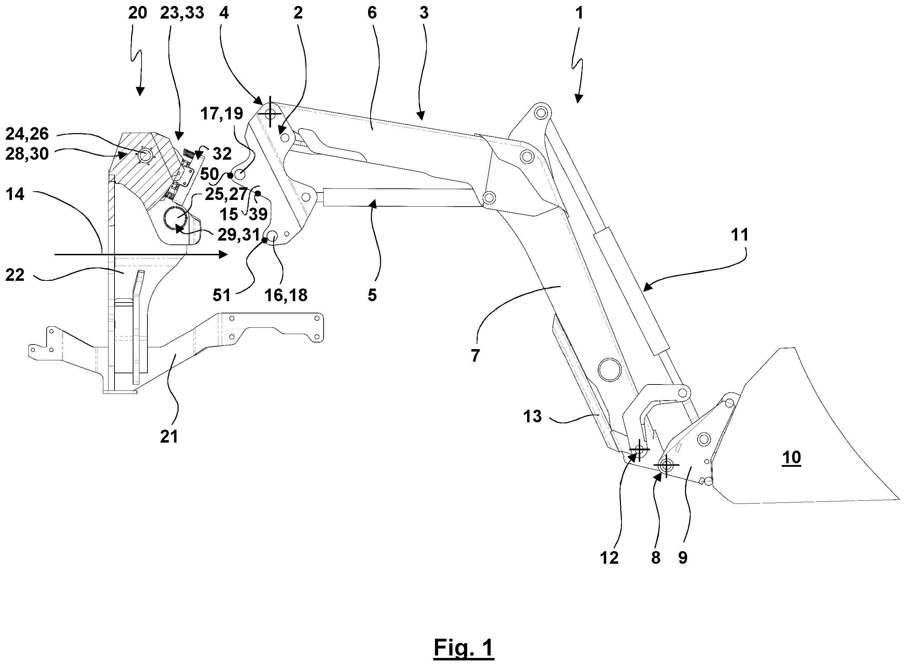

**Fig. 1** zeigt einen Frontlader 1, der grundsätzlich entsprechend dem Stand der Technik ausgebildet sein kann und über eine Säule 2 verfügt. An der Säule 2 ist über ein Schwenklager 4 eine Schwinge 3 verschwenkbar angelenkt. Eine Verschwenkung der Schwinge 3 gegenüber der Säule 2 kann über einen Hydraulikzylinder 5 gesteuert werden. Die Schwinge 3 verfügt über fest miteinander verbundene, abgewinkelte Holme 6, 7. In dem der Säule 2 abgewandten Endbereich ist an der Schwinge 3 in einem Schwenklager 8 eine Werkzeugaufnahme 9 angelenkt. An der Werkzeugaufnahme 9 kann lösbar ein Werkzeug 10, hier eine Schaufel, befestigt sein oder werden. Die Werkzeugaufnahme 9 (und damit das Werkzeug 10) kann über einen Hydraulikzylinder 11 um das Schwenklager 8 gegenüber der Schwinge 3 verschwenkt werden.

In einem Schwenklager 12 ist an der Schwinge 3 verschwenkbar eine Abstellstütze 13 angelenkt, die über einen hier nicht dargestellten Hydraulikzylinder aus der in Fig. 1 dargestellten, an die Schwinge 3 angelegten nicht wirksamen Stellung in eine Abstützstellung (und umgekehrt) bewegt werden kann. In der Abstützstellung ist der Frontlader 1 über das Werkzeug und die Abstellstütze 13 auf dem Boden abgestellt. Tatsächlich ist (abweichend zu der Darstellung in Fig. 1) der Frontlader 1 für den im Folgenden beschriebenen Kopplungsvorgang über das Werkzeug 10 und die Abstellstütze 13 abgestellt, so dass sich die Abstellstütze 13 in der Abstellstellung befindet. In dem derart abgestellten Zustand des Frontladers 1 ist die Säule 2 und der benachbarte Endbereich der Schwinge 3 außerhalb der Abstellorte der Abstellstütze 13 und des Werkzeugs 10 angeordnet, so dass die Säule 2 gut für den Koppelvorgang zugänglich ist.

Die Säule 2 verfügt über ein parallel zu einer Annäherungs- oder Fahrtrichtung orientiertes Blech oder einen Kopplungskörper 15 Die Säule 2 verfügt über in Querrichtung orientierte Verriegelungsausnehmungen 16, 17, die hier als durch das Blech oder den Kopplungskörper 15 durchgehende Verriegelungsbohrungen 18, 19 ausgebildet sind.

Beabstandet von dem Frontlader 1 ist in Fig. 1 ein Anbauturm 20 angeordnet. Der Anbauturm 20 weist ein von einem Blech gebildetes Rahmenelement 21, welches in beiden Endbereichen mit einem tragenden Bauelement des Arbeitsfahrzeugs, insbesondere einem Fahrzeugrahmen oder -chassis, verschraubt ist, sowie eine Halterung 22 auf. Die Halterung 22 und das Rahmenelement 21 können ein- oder mehrstückig ausgebildet sein, wobei auch möglich ist, dass das Rahmenelement 21 und die Halterung 22 miteinander verschweißt sind. Der Anbauturm 20 ist in grober Näherung entsprechend einem auf dem Kopf stehenden T ausgebildet, wobei das Rahmenelement 21 den Horizontalschenkel des T bildet, während die Halterung 22 den Vertikalschenkel des T bildet. In dem oberen Endbereich, also in dem freien Endbereich des Vertikalschenkels des T, verfügt die Halterung 22 über eine Frontladerkopplungseinrichtung 23. Die Frontladerkopplungseinrichtung 23 weist wiederum Verriegelungselemente 24, 25, die hier als Verriegelungsbolzen 26, 27 ausgebildet sind, Aktuatoren 28, 29, die hier als Hydraulikzylinder 30, 31 ausgebildet sind und der Betätigung der Verriegelungselemente 24, 25 dienen, und eine Leitungskopplungseinrichtung 32 auf. Die Frontladerkopplungseinrichtung 23 stellt auf diese Weise eine Anbaukonsole 33 bereit.

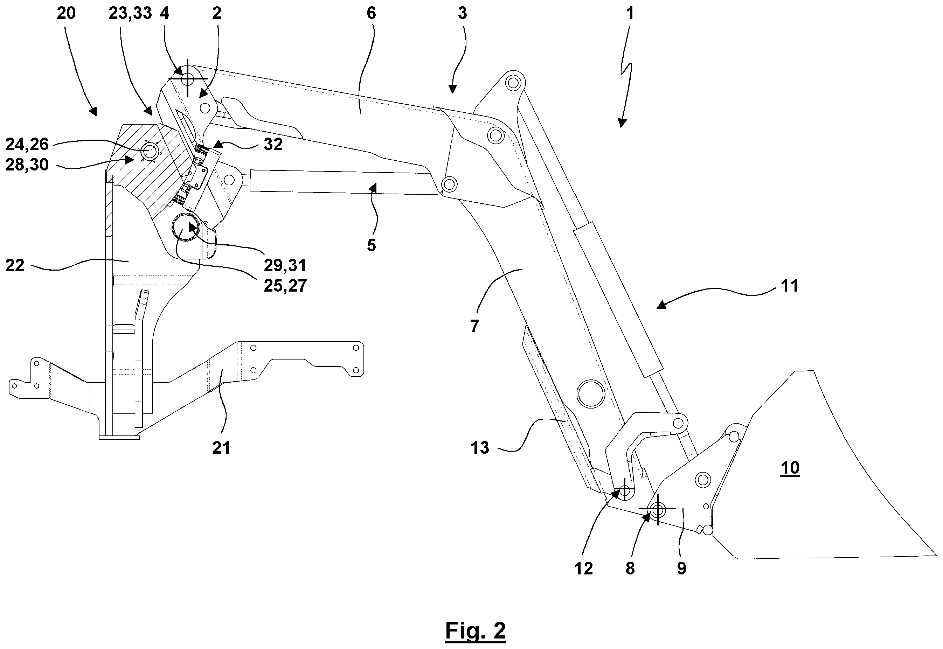

**Fig. 2** zeigt den Anbauturm 20 mit Frontladerkopplungseinrichtung 23 und den Frontlader 1, wobei hier allerdings eine Annäherung in Fahrtrichtung 14 erfolgt ist und eine Kopplung der Frontladerkopplungseinrichtung 23 (und damit des Anbauturms 20 und des Arbeitsfahrzeugs) mit der Säule 2 des Frontladers 1 erfolgt ist. Diese Kopplung wird einerseits dadurch herbeigeführt, dass die Relativstellung des Frontladers 1 und des Anbauturms 20 mit der Frontladerkopplungseinrichtung 23 so verändert worden ist, dass die Verriegelungselemente 24 in Fahrzeugquerrichtung fluchtend zu den Verriegelungsausnehmungen 16, 17 angeordnet sind. In dieser Relativstellung sind die Aktuatoren 28, 29 betätigt worden, so dass die Verriegelungselemente 24, 25 von einer entriegelten Stellung in eine verriegelte Stellung überführt worden sind. In der entriegelten Stellung befinden sich die Verriegelungselemente 24, 25 außer Eingriff mit den Verriegelungsausnehmungen 16, 17. Hingegen greifen die Verriegelungselemente 24, 25 in der verriegelten Stellung formschlüssig in die Verriegelungsausnehmungen 16, 17 ein. Des Weiteren ist eine Kopplung der Leitungskopplungseinrichtung 22 mit einer Leitungskopplungseinrichtung 34 der Säule 2 erfolgt.

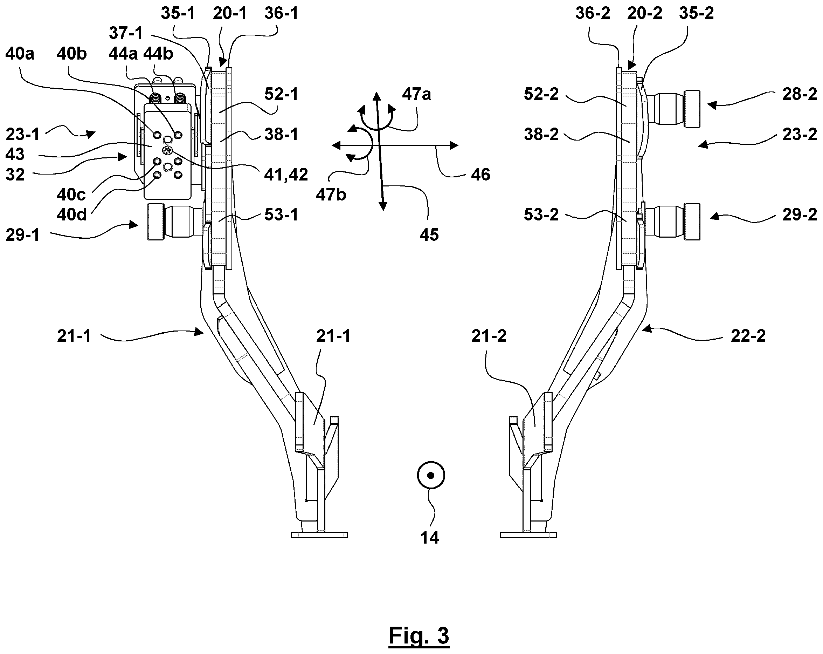

**Fig. 3** zeigt die beiden Anbautürme 20-1, 20-2 mit den zugeordneten Frontladerkopplungseinrichtungen 23-1, 23-2. Zu erkennen ist hier, dass lediglich eine Frontladerkopplungseinrichtung 23-1 eine Leitungskopplungseinrichtung 32 aufweist, während die andere Frontladerkopplungseinrichtung 23-2 keine Leitungskopplungseinrichtung aufweist. Beide Frontladerkopplungseinrichtungen 23 verfügen aber über Verriegelungselemente 24-1 und 25-1 [bzw. 24-2, 25-2] mit zugeordneten Aktuatoren 28-1 und 29-1 [bzw. 28-2 und 29-2].

Die Anbautürme 20 verfügen jeweils über ein Paar von Blechen oder Kopplungskörpern 15a, 15b. Mit der Annäherung der Anbaukonsolen 20 an die Säulen 2 des Frontladers 1 in Fahrtrichtung 14 tritt das Blech oder der Kopplungskörper 15 der Säulen 2 in den Zwischenraum zwischen den Blechen 35, 36 ein. Hierbei kann mindestens ein Blech 35 eine Einführschräge 37 aufweisen.

Zwischen den Blechen 35, 36 kann eine Führungsfläche 38 angeordnet sein, die parallel zur Fahrzeugquerachse orientiert ist und entgegen der Fahrtrichtung 14 ansteigt. An dieser Führungsfläche 38 kann eine entsprechend geneigte Führungsfläche 39 des Blechs oder Kopplungskörpers 15 bei dem Eintritt zwischen die Bleche 35, 36 zur Anlage kommen zwecks Gewährleistung einer Führung.

Die Leitungskopplungseinrichtung 32 verfügt über mehrere hydraulische Kontakte 40 und elektrische Kontakte 41. Für das dargestellte Ausführungsbeispiel sind die elektrischen Kontakte 41 Bestandteil eines mehrpoligen Anschlusssteckers 42. Für das dargestellte Ausführungsbeispiel sind des Weiteren die Kontakte 40, 41 und der Anschlussstecker 42 in einen plattenförmigen Trag- und/oder Führungskörper 43 integriert. Der Trag- und/oder Führungskörper 43 ist an der Anbaukonsole 33 über Federn 44 abgestützt, so dass unter Beaufschlagung der Federn 44 der Trag- und/oder Führungskörper 43 und damit die Kontakte 40, 41 einen Längsfreiheitsgrad 45, einen Querfreiheitsgrad 46 und/oder einen Schwenkfreiheitsgrad 47 aufweisen.

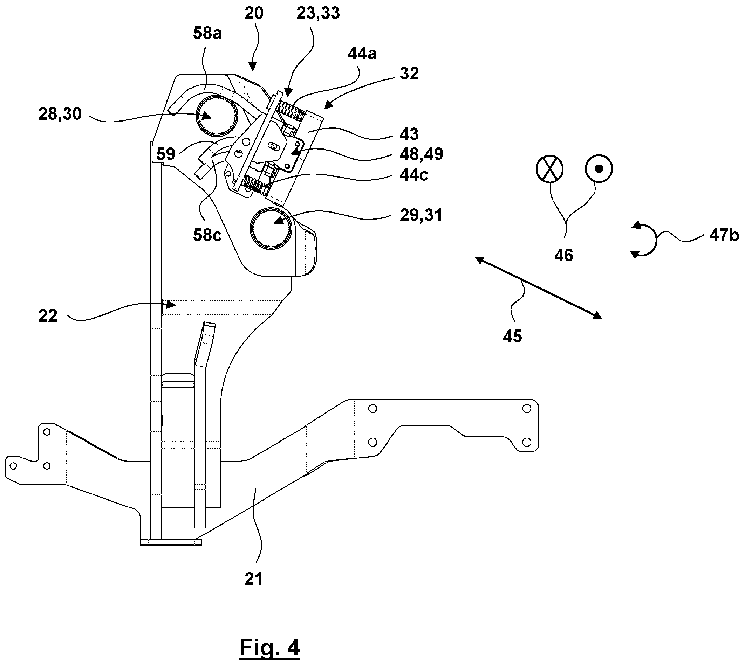

Wie insbesondere in **Fig. 4** zu erkennen ist, sind die Kontakte 40, 41 mit (elektrischen oder hydraulischen) Verbindungsleitungen 58, 59 verbunden. Des Weiteren ist in Fig. 4 zu erkennen, dass die Freiheitsgrade 45, 46, 47 des Trag- und/oder Führungskörpers 43 und damit der Kontakte 40, 41 durch eine Führungseinrichtung 48 und/oder Anschläge 49 geführt und/oder begrenzt sein können.

Die Säule 2, insbesondere das Blech oder der Kopplungskörper 15, weist einen Anschlag 50 und einen weiteren Anschlag 51 auf. Der Anschlag 50 tritt mit der Bewegung des Anbauturms 20 in Fahrtrichtung 14 ein in eine in diese Richtung offene Konsolenaufnahme 52 der Anbaukonsole 33, während der Anschlag 51 (zeitgleich oder zu einem anderen Zeitpunkt) zur Anlage an eine Konsolenaufnahme 53 der Anbaukonsole 33 kommt. Hierbei gewährleistet der Kontakt des Anschlags 50 mit der Konsolenaufnahme 52, dass das Verriegelungselement 24 fluchtend zu der Verriegelungsausnehmung 17 angeordnet ist, während der Kontakt des Anschlags 51 mit der Konsolenaufnahme 53 gewährleistet, dass das Verriegelungselement 25 fluchtend zu der Verriegelungsausnehmung 16 angeordnet ist. Zu diesem Zweck stellen die Konsolenaufnahmen 52, 53 Kontaktflächen für die Anschläge 50, 51 bereit, deren Flächennormalen eine Komponente in Fahrtrichtung 14 aufweisen.

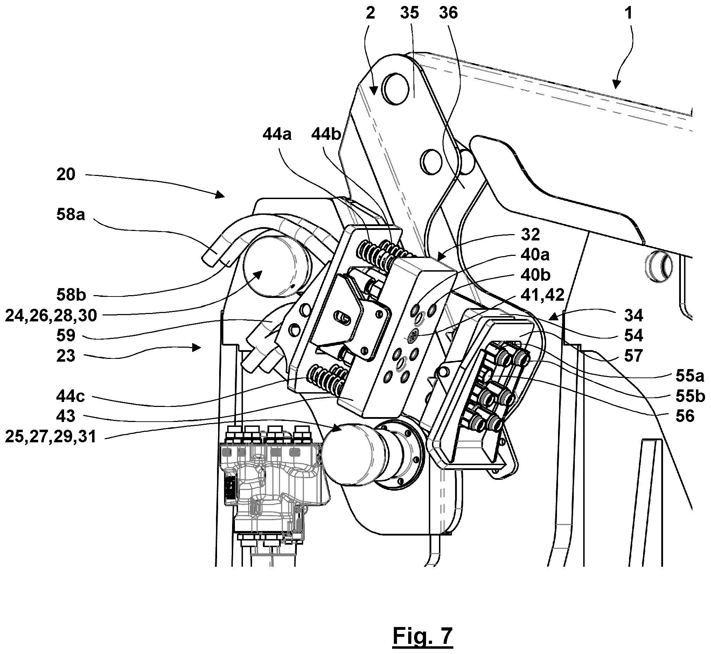

**Fig. 7** zeigt in einer räumlichen Detailansicht den Anbauturm 20 mit der Frontladerkopplungseinrichtung 23 und der Leitungskopplungseinrichtung 32 einerseits und den Frontlader 1 im Bereich der Säule 2 mit der an der Säule 2 gehaltenen Leitungskopplungseinrichtung 34. Zu erkennen ist, dass auch die Leitungskopplungseinrichtung 34 einen Trag- und/oder Führungskörper 54 aufweist. An dem Trag- und/oder Führungskörper 54 sind (vergleichbar zu der Leitungskopplungseinrichtung 32) hydraulische und elektrische Kontakte 55, 56 angeordnet. Der Trag- und/oder Führungskörper 54 ist mit mindestens einem Freiheitsgrad an einem von der Säule 2 ausgebildeten oder hieran befestigten Abstützkörper 57 abgestützt. Für das dargestellte Ausführungsbeispiel stützt der Abstützkörper 57 den Trag- und/oder Führungskörper 54 mit einem Schwenkfreiheitsgrad um eine Fahrzeugquerachse ab.

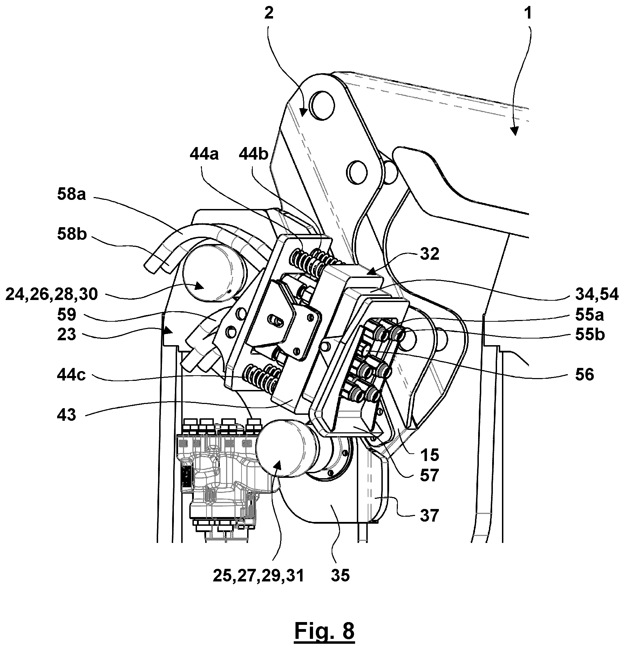

Während gemäß Fig. 7 noch keine vollständige Annäherung des Frontladers an den Anbauturm 20 erfolgt ist, womit die Leitungskopplungseinrichtungen 32, 34 beabstandet voneinander angeordnet sind, ist gemäß Fig. 8 die Annäherung erfolgt mit einer Kopplung der Leitungskopplungseinrichtungen 32, 34 miteinander. Die Trag- und/oder Führungskörper 43, 54 sind stirnseitig aneinander zur Anlage gekommen, wobei die flächige Anlage gewährleistet werden kann durch eine Ausgleichsbewegung der Federn 44 und/oder der verschwenkbaren Lagerung des Trag- und/oder Führungskörpers 54 an dem Abstützkörper 57. Die Lage des Anschlags 51 und der Konsolenaufnahme 53 relativ zu den Trag- und/oder Führungskörpern 43, 54 kann dabei derart bemessen sein, dass bei der Anlage des Anschlags 51 an der Konsolenaufnahme 53 die Federn 44 so vorgespannt sind, dass die Leitungskopplungseinrichtungen 32, 34 mit einer Kontaktkraft aneinander angepresst werden. Mit einer derartigen Kopplung der Leitungskopplungseinrichtungen 32, 34 erfolgt eine abgedichtete hydraulische Verbindung der hydraulischen Kontakte 40, 55 und eine elektrische Verbindung der elektrischen Kontakte 41, 56.

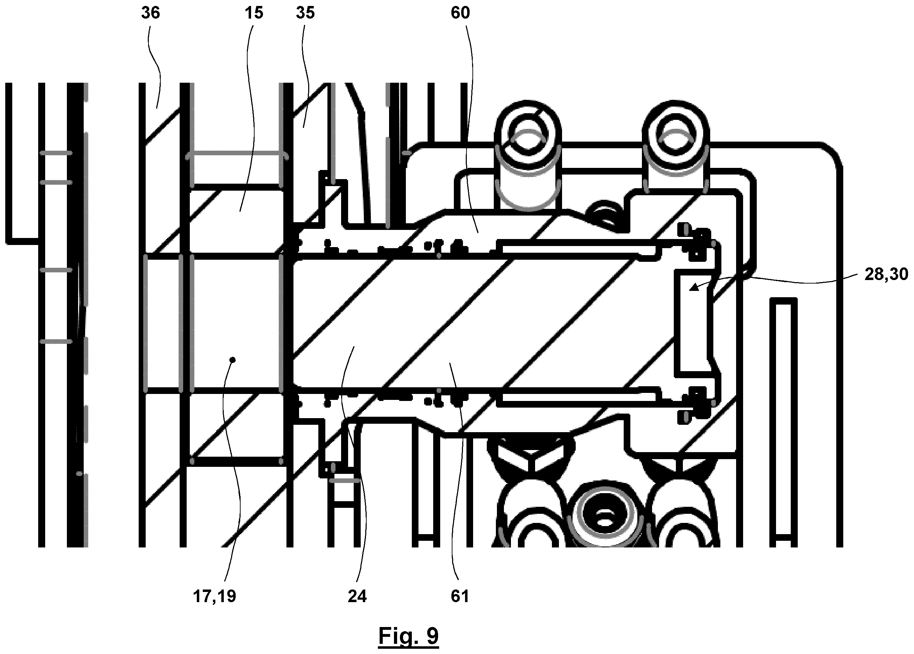

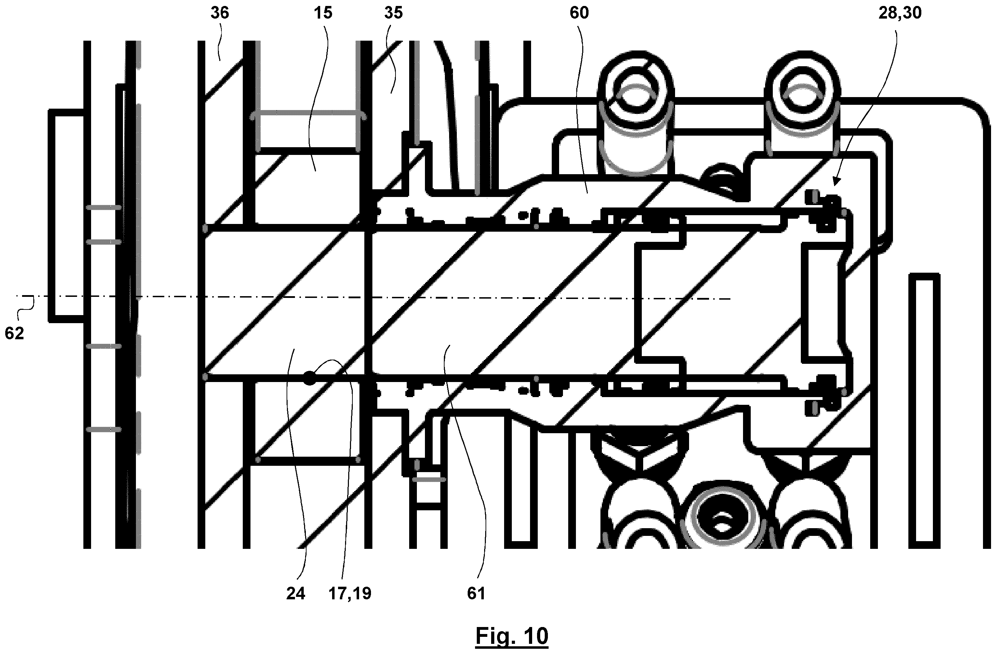

**Fig. 9** **und** **10** zeigen in einer geschnittenen räumlichen Detailansicht einen Aktuator 28, wobei das im Folgenden Gesagte für den Aktuator 29 entsprechend gelten kann. Der Aktuator 28 ist an dem Blech 35 gehalten. Der Aktuator 28 verfügt über ein Zylindergehäuse 60 mit einer darin gebildeten Kammer. In dem Zylindergehäuse 60 ist unter Abdichtung und Ausbildung einer Druckkammer ein Kolben 61 verschieblich geführt. Der Kolben 61 bildet dabei integral den Verriegelungsbolzen 26 aus. Dies kann dadurch erfolgen, dass der Kolben als Kolbenstange ausgebildet ist, der endseitig einen Ringbund ausbildet, dessen Stirnseite die Druckkammer begrenzt. Die Kolbenstange bildet dann in dem Ringbund abgewandten Endbereich den Verriegelungsbolzen 26 aus. Zu erkennen ist, dass mit einer Druckbeaufschlagung der Druckkammer der Verriegelungsbolzen 26 aus dem Zylindergehäuse 60 herausbewegt werden kann und in die Verriegelungsbohrung 19 eintreten kann. Vorzugsweise verfügt auch das Blech 36 über eine entsprechende Bohrung, so dass der Verriegelungsbolzen 26 durch die Verriegelungsbohrung 19 hindurch in die Bohrung des Blechs 36 eintreten und auch mit diesem verriegeln kann.

Fig. 9 zeigt die entriegelte Stellung, während Fig. 10 die verriegelte Stellung des Verriegelungsbolzens 26 zeigt.

Eine Rückführung des Verriegelungsbolzens 26 aus der verriegelten Stellung in die entriegelte Stellung kann durch die Beaufschlagung einer Feder erfolgen oder infolge einer Ausbildung des Aktuators 28 als doppelt wirkender Hydraulikzylinder mit einer weiteren, in die andere Richtung wirkenden Druckkammer zwischen dem Kolben 61 und dem Zylindergehäuse 60.

Möglich ist, dass für die Annäherung des Anbauturms 20 in die Fahrtrichtung 14 an den Frontlader 1 und dessen Säule 2 allein durch die Bewegung des Arbeitsfahrzeugs und damit des Anbauturms 20 eine Relativstellung zwischen der Säule 2 und dem Anbauturm 20 herbeigeführt wird, in welcher dann gleichzeitig die beiden Aktuatoren 28, 29 betätigt werden und die Verriegelungselemente 24, 25 in die Verriegelungsausnehmungen 16, 17 eintreten können. Hierbei kann durch die Wirkung der Einführschrägen 37 und/oder der Führungsflächen 38, 39 die vorbestimmte Relativlage gewährleistet werden. In diesem Fall kann eine gleichzeitige Betätigung der Aktuatoren 28, 29 durch gleichzeitige Beaufschlagung der Hydraulikzylinder 30, 31 erfolgen.

Möglich ist aber auch, dass das Fluchten der Verriegelungselemente 24, 25 mit den zugeordneten Verriegelungsausnehmungen 16, 17 nacheinander (in beliebiger Reihenfolge) herbeigeführt wird.

Für eine besondere Ausführungsform des erfindungsgemäßen Verfahrens erfolgt die Kopplung des Frontladers 1 mit dem Anbauturm 20 wie folgt:
a) Der Frontlader 1 wird, vorzugsweise mit ausgefahrenen Abstellstützen 13, auf dem Boden abgestellt.
b) Der an dem Arbeitsfahrzeug befestige Anbauturm 20 wird durch Fahrt des Arbeitsfahrzeugs in Fahrtrichtung 14 an die Säule 2 des Frontladers 1 angenähert.
c) Die Führungsflächen 38, 39 kommen aneinander zur Anlage, womit eine relative Gleitbewegung und erste relative Ausrichtung der Säule 2 gegenüber dem Anbauturm 20 erfolgt.
d) Am Ende der Annäherungsbewegung ist das Verriegelungselement 24 fluchtend zu der Verriegelungsausnehmung 17 angeordnet, womit der Aktuator 28 betätigt werden kann. Hiermit ist eine erste mechanische Verbindung zwischen der Säule 2 und dem Anbauturm 20 geschaffen, die die relativen Freiheitsgrade zwischen der Säule 2 und dem Anbauturm 20 verringert. Hierbei kann das als Verriegelungsbolzen 26 ausgebildete Verriegelungselement 24 in der als Verriegelungsbohrung 19 ausgebildeten Verriegelungsausnehmung 17 eine Schwenkachse 62 bereitstellen. Die Schwenkachse 62 gewährleistet einen verbleibenden relativen Schwenkfreiheitsgrad zwischen der Säule 2 und dem Anbauturm 20 um eine Fahrzeugquerachse.
   Während der Annäherungsbewegung erfolgt auch eine Kopplung der Leitungskopplungseinrichtungen 32, 34. Hierbei können die Freiheitsgrade der Trag- und/oder Führungskörper 43, 54 Ausgleichsbewegungen gewährleisten, beispielsweise während der Gleitbewegung entlang der Einführschrägen 37, während der Gleitbewegung entlang der Führungsflächen 38, 39 und/oder für einen Ausgleich von Bodenunebenheiten zwischen dem Aufstandsort des Frontladers 1 und dem Aufstandsort des Arbeitsfahrzeugs auf dem Boden.
e) Hieran anschließend erfolgt ein Ausfahren des Hydraulikzylinders 5, der zu einer Verschwenkung der Säule 2 führt, die um die von dem Verriegelungsbolzen 26 vorgegebene Schwenkachse 62 erfolgt. Am Ende dieser Schwenkbewegung kommt der Anschlag 51 zur Anlage an die Konsolenaufnahme 53. Während dieser Schwenkbewegung kann der Kontakt der Trag- und/oder Führungskörper 43, 54 aufrechterhalten bleiben infolge der Nutzung der Freiheitsgrade derselben und insbesondere unter einer Veränderung der Beaufschlagung der Federn 44.
f) Es erfolgt dann eine Betätigung des Aktuators 29 mit dem Überführen des Verriegelungselements 25 in die verriegelte Stellung in der Verriegelungsausnehmung 16.

### BEZUGSZEICHENLISTE

- 1: Frontlader
- 2: Säule
- 3: Schwinge
- 4: Schwenklager
- 5: Hydraulikzylinder
- 6: Holm
- 7: Holm
- 8: Schwenklager
- 9: Werkzeugaufnahme
- 10: Werkzeug
- 11: Hydraulikzylinder
- 12: Schwenklager
- 13: Abstellstütze
- 14: Fahrtrichtung
- 15: Blech oder Kopplungskörper
- 16: Verriegelungsausnehmung
- 17: Verriegelungsausnehmung
- 18: Verriegelungsbohrung
- 19: Verriegelungsbohrung
- 20: Anbauturm
- 21: Rahmenelement
- 22: Halterung
- 23: Frontladerkopplungseinrichtung
- 24: Verriegelungselement
- 25: Verriegelungselement
- 26: Verriegelungsbolzen
- 27: Verriegelungsbolzen
- 28: Aktuator
- 29: Aktuator
- 30: Hydraulikzylinder
- 31: Hydraulikzylinder
- 32: Leitungskopplungseinrichtung
- 33: Anbaukonsole
- 34: Leitungskopplungseinrichtung
- 35: Blech
- 36: Blech
- 37: Einführschräge
- 38: Führungsfläche
- 39: Führungsfläche
- 40: hydraulischer Kontakt
- 41: elektrischer Kontakt
- 42: Anschlussstecker
- 43: Trag- und/oder Führungskörper
- 44: Feder
- 45: Längsfreiheitsgrad
- 46: Querfreiheitsgrad
- 47: Schwenkfreiheitsgrad
- 48: Führungseinrichtung
- 49: Anschlag
- 50: Anschlag
- 51: Anschlag
- 52: Konsolenaufnahme
- 53: Konsolenaufnahme
- 54: Trag- und/oder Führungskörper
- 55: hydraulischer Kontakt
- 56: elektrischer Kontakt
- 57: Abstützkörper
- 58: Verbindungsleitung
- 59: Verbindungsleitung
- 60: Zylindergehäuse
- 61: Kolben
- 62: Schwenkachse

## Patentansprüche

1. Verfahren zum automatischen Koppeln eines Frontladers (1) mit einem Arbeitsfahrzeug mit folgendem Verfahrensschritt:
a) Annähern des Arbeitsfahrzeugs in eine Fahrtrichtung (14) des Arbeitsfahrzeugs an den Frontlader (1), bis ein Anschlag (50) einer Säule (2) des Frontladers (1) zur Anlage an eine Konsolenaufnahme (52) einer Anbaukonsole (33) des Arbeitsfahrzeugs kommt,
**gekennzeichnet durch den Verfahrensschritt**
b) Bewegen eines als Verriegelungsbolzen (26) ausgebildeten Verriegelungselements (24) der Anbaukonsole (33) des Arbeitsfahrzeugs in eine Bewegungsrichtung quer zur Fahrtrichtung (14) von einer entriegelten Stellung, in der das Verrieglungselement (24) außer Eingriff mit einer Verriegelungsausnehmung (17) der Säule (2) des Frontladers (1) ist, in eine verriegelte Stellung, in der das Verriegelungselement (24) in die Verriegelungsausnehmung (17) der Säule (2) eingreift,
wobei vorzugsweise als Verriegelungsausnehmung eine Verriegelungsbohrung verwendet wird.

2. Verfahren nach Anspruch 1, wobei der Eingriff des Verriegelungselements (24) in die Verriegelungsausnehmung (17) als Führung für eine Relativbewegung zwischen der Anbaukonsole (33) des Arbeitsfahrzeugs und der Säule (2) des Frontladers (1) verwendet wird.

3. Verfahren nach Anspruch 1 oder 2, wobei ein weiteres Verriegelungselement (25) vorhanden ist, welches unabhängig von dem Verriegelungselement (24) in eine Bewegungsrichtung quer zur Fahrtrichtung (14) von einer entriegelten Stellung, in der das weitere Verriegelungselement (25) außer Eingriff mit einer weiteren Verriegelungsausnehmung (16) der Säule (2) des Frontladers (1) ist, in eine verriegelte Stellung, in der das weitere Verriegelungselement (25) in die weitere Verriegelungsausnehmung (16) der Säule (2) eingreift, bewegbar ist.

4. Verfahren nach einem der Ansprüche 1 bis 3, wobei bewegungsgesteuert mit dem Annähern des Arbeitsfahrzeugs in die Fahrtrichtung (14) des Arbeitsfahrzeugs an den Frontlader (1) eine an der Anbaukonsole (33) gehaltene hydraulische und/oder elektrische Leitungskopplungseinrichtung (32) und eine an der Säule (2) gehaltene hydraulische und/oder elektrische Leitungskopplungseinrichtung (34) miteinander verbunden werden.

5. Verfahren nach Anspruch 4 in Rückbeziehung auf Anspruch 3, wobei
a) nach dem Bewegen des Verriegelungselements (24) in die verriegelte Stellung und nach der Verbindung der beiden Leitungskopplungseinrichtungen (32, 34) miteinander über die Leitungskopplungseinrichtungen (32, 34) eine Beaufschlagung eines Aktuators (insbesondere Hydraulikzylinder 5) des Frontladers (1) erfolgt,
b) infolge dieser Beaufschlagung des Aktuators (insbesondere Hydraulikzylinder 5) des Frontladers (1) ein weiterer Anschlag (51) der Säule (2) des Frontladers (1) zur Anlage an eine weitere Konsolenaufnahme (53) der Anbaukonsole (33) des Arbeitsfahrzeugs kommt und
c) das weitere Verriegelungselement (25) der Anbaukonsole (33) des Arbeitsfahrzeugs von der entriegelten Stellung, in der das weitere Verrieglungselement (25) außer Eingriff mit der weiteren Verriegelungsausnehmung (16) der Säule (2) ist, in die verriegelte Stellung, in der das weitere Verriegelungselement (25) in die weitere Verriegelungsausnehmung (16) der Säule (2) eingreift, bewegt wird.

6. Automatische Frontladerkopplungseinrichtung (23) für eine automatische Kopplung eines Frontladers (1) mit einem Arbeitsfahrzeug, insbesondere mit einem Verfahren nach einem der Ansprüche 1 bis 5, mit einer Anbaukonsole (33) des Arbeitsfahrzeugs mit zwei Konsolenaufnahmen (52, 53), wobei mindestens eine Konsolenaufnahme (52; 53) in Fahrtrichtung (14) offen ist,
**gekennzeichnet durch**
a) ein als Verriegelungsbolzen (26) ausgebildetes Verriegelungselement (24) der Anbaukonsole (33) des Arbeitsfahrzeugs, welches in eine Richtung quer zur Fahrtrichtung (14) verschieblich geführt ist, und
b) einen Aktuator (28), über den das Verriegelungselement (24) von der nicht verriegelten Stellung in die verriegelte Stellung bewegbar ist,
vorzugsweise mit einer elektrischen und/oder hydraulischen Leitungskopplungseinrichtung (32), welche elektrische und/oder hydraulische Kontakte (40, 41) aufweist, die mit einem Längsfreiheitsgrad (45), einem Querfreiheitsgrad (46) und/oder einem Schwenkfreiheitsgrad (47) abgestützt sind.

7. Frontladerkopplungseinrichtung (23) nach Anspruch 6, wobei der Aktuator (28) ein hydraulischer Aktuator (insbesondere Hydraulikzylinder 30) ist und ein hydraulisch bewegtes Zylindergehäuse (60) oder ein hydraulisch bewegter Kolben (61) des hydraulischen Aktuators das Verriegelungselement (24) bildet.

8. Frontladerkopplungseinrichtung (23) nach Anspruch 6 oder 7, wobei die Anbaukonsole (33) und/oder die Säule (2) mindestens eine Einführschräge (37) aufweisen/aufweist.

9. Frontladerkopplungseinrichtung (23) nach einem der Ansprüche 6 bis 8, wobei mindestens ein Sensor oder Schalter vorhanden ist, welcher eine Relativstellung zwischen der Säule (2) und der Anbaukonsole (33) erfasst.

10. Arbeitsfahrzeug mit einer Frontladerkopplungseinrichtung (23) nach einem der Ansprüche 6 bis 9.

11. Arbeitsfahrzeugsystem mit einem Arbeitsfahrzeug nach Anspruch 10, an welchem über die Frontladerkopplungseinrichtung (23) ein Frontlader (1) gehalten ist.

## Claims

1. Method for automatically coupling a front loader (1) to a work vehicle, with the following method step:
a) approaching the work vehicle to the front loader (1) in a direction of travel (14) of the work vehicle until a stop (50) of a pillar (2) of the front loader (1) comes into abutment against a bracket receptacle (52) of a mounting bracket (33) of the work vehicle,
**characterised by the method step**
b) moving a locking element (24), configured as a locking bolt (26), of the mounting bracket (33) of the work vehicle in a direction of movement transverse to the direction of travel (14) from an unlocked position, in which the locking element (24) is out of engagement with a locking recess (17) of the pillar (2) of the front loader (1), into a locked position, in which the locking element (24) engages in the locking recess (17) of the pillar (2),
wherein preferably a locking bore is used as the locking recess.

2. Method according to claim 1, **wherein** the engagement of the locking element (24) in the locking recess (17) is used as a guide for a relative movement between the mounting bracket (33) of the work vehicle and the pillar (2) of the front loader (1).

3. Method according to claim 1 or 2, **wherein** a further locking element (25) is present, which is movable independently of the locking element (24) in a direction of movement transverse to the direction of travel (14) from an unlocked position, in which the further locking element (25) is out of engagement with a further locking recess (16) of the pillar (2) of the front loader (1), into a locked position, in which the further locking element (25) engages in the further locking recess (16) of the pillar (2).

4. Method according to any one of claims 1 to 3, **wherein**, in a movement-controlled manner as the work vehicle approaches the front loader (1) in the direction of travel (14) of the work vehicle, a hydraulic and/or electrical line coupling device (32) held on the mounting bracket (33) and a hydraulic and/or electrical line coupling device (34) held on the pillar (2) are connected to one another.

5. Method according to claim 4 when dependent on claim 3, **wherein**
a) after the locking element (24) has been moved into the locked position and after the two line coupling devices (32, 34) have been connected to one another, an actuator (in particular hydraulic cylinder 5) of the front loader (1) is biased via the line coupling devices (32, 34),
b) as a result of the actuator (in particular hydraulic cylinder 5) of the front loader (1) being biased in this manner, a further stop (51) of the pillar (2) of the front loader (1) comes into abutment against a further bracket receptacle (53) of the mounting bracket (33) of the work vehicle, and
c) the further locking element (25) of the mounting bracket (33) of the work vehicle is moved from the unlocked position, in which the further locking element (25) is out of engagement with the further locking recess (16) of the pillar (2), into the locked position, in which the further locking element (25) engages in the further locking recess (16) of the pillar (2).

6. Automatic front loader coupling device (23) for automatically coupling a front loader (1) to a work vehicle, in particular by a method according to any one of claims 1 to 5, with a mounting bracket (33) of the work vehicle with two bracket receptacles (52, 53), wherein at least one bracket receptacle (52; 53) is open in the direction of travel (14),
**characterised by**
a) a locking element (24), configured as a locking bolt (26), of the mounting bracket (33) of the work vehicle, which is guided so as to be displaceable in a direction transverse to the direction of travel (14), and
b) an actuator (28), by means of which the locking element (24) is movable from the non-locked position into the locked position,
preferably with an electrical and/or hydraulic line coupling device (32) which has electrical and/or hydraulic contacts (40, 41) that are supported with a longitudinal degree of freedom (45), a transverse degree of freedom (46) and/or a pivoting degree of freedom (47).

7. Front loader coupling device (23) according to claim 6, **wherein** the actuator (28) is a hydraulic actuator (in particular hydraulic cylinder 30) and a hydraulically moved cylinder housing (60) or a hydraulically moved piston (61) of the hydraulic actuator forms the locking element (24).

8. Front loader coupling device (23) according to claim 6 or 7, **wherein** the mounting bracket (33) and/or the pillar (2) have/has at least one insertion bevel (37).

9. Front loader coupling device (23) according to any one of claims 6 to 8, **wherein** at least one sensor or switch is present which detects a relative position between the pillar (2) and the mounting bracket (33).

10. Work vehicle with a front loader coupling device (23) according to any one of claims 6 to 9.

11. Work vehicle system with a work vehicle according to claim 10, on which a front loader (1) is held by the front loader coupling device (23).

## Revendications

1. Procédé de couplage automatique d'un chargeur-frontal (1) avec un véhicule-de-travail comprenant l'étape de procédé suivante :
a) Rapprochement du véhicule-de-travail dans une direction-de-marche (14) du véhicule-de-travail vers le chargeur-frontal (1), jusqu'à ce qu'une butée (50) d'un montant (2) du chargeur-frontal (1) vienne en contact avec un logement-de-console (52) d'une console-d'attelage (33) du véhicule-de-travail,
**caractérisé par l'étape de procédé**
b) Déplacement d'un élément-de-verrouillage (24) conçu comme boulon-de-verrouillage (26) de la console-d'attelage (33) du véhicule-de-travail dans une direction-de-déplacement transversale à la direction-de-marche (14) depuis une position-déverrouillée, dans laquelle l'élément-de-verrouillage (24) est hors engagement avec un évidement-de-verrouillage (17) du montant (2) du chargeur-frontal (1), vers une position-verrouillée, dans laquelle l'élément-de-verrouillage (24) engage l'évidement-de-verrouillage (17) du montant (2),
où, de préférence, un trou-de-verrouillage est utilisé comme évidement-de-verrouillage.

2. Procédé selon la revendication 1, **dans lequel** l'engagement de l'élément-de-verrouillage (24) dans l'évidement-de-verrouillage (17) est utilisé comme guidage pour un mouvement-relatif entre la console-d'attelage (33) du véhicule-de-travail et le montant (2) du chargeur-frontal (1).

3. Procédé selon la revendication 1 ou 2, **dans lequel** un autre élément-de-verrouillage (25) est présent, lequel, indépendamment de l'élément-de-verrouillage (24), est déplaçable dans une direction-de-déplacement transversale à la direction-de-marche (14) depuis une position-déverrouillée, dans laquelle l'autre élément-de-verrouillage (25) est hors engagement avec un autre évidement-de-verrouillage (16) du montant (2) du chargeur-frontal (1), vers une position-verrouillée, dans laquelle l'autre élément-de-verrouillage (25) engage l'autre évidement-de-verrouillage (16) du montant (2).

4. Procédé selon l'une des revendications 1 à 3, **dans lequel**, commandé par le mouvement, lors du rapprochement du véhicule-de-travail dans la direction-de-marche (14) du véhicule-de-travail vers le chargeur-frontal (1), un dispositif-de-couplage-de-conduites (32) hydraulique et/ou électrique maintenu sur la console-d'attelage (33) et un dispositif-de-couplage-de-conduites (34) hydraulique et/ou électrique maintenu sur le montant (2) sont reliés entre eux.

5. Procédé selon la revendication 4 en référence à la revendication 3, **dans lequel**
a) après le déplacement de l'élément-de-verrouillage (24) dans la position-verrouillée et après la connexion des deux dispositifs-de-couplage-de-conduites (32, 34) entre eux, via les dispositifs-de-couplage-de-conduites (32, 34), un actionnement d'un actionneur (en particulier vérin-hydraulique 5) du chargeur-frontal (1) a lieu,
b) à la suite de cet actionnement de l'actionneur (en particulier vérin-hydraulique 5) du chargeur-frontal (1), une autre butée (51) du montant (2) du chargeur-frontal (1) vient en contact avec un autre logement-de-console (53) de la console-d'attelage (33) du véhicule-de-travail
et
c) l'autre élément-de-verrouillage (25) de la console-d'attelage (33) du véhicule-de-travail est déplacé depuis la position-déverrouillée, dans laquelle l'autre élément-de-verrouillage (25) est hors engagement avec l'autre évidement-de-verrouillage (16) du montant (2), vers la position-verrouillée, dans laquelle l'autre élément-de-verrouillage (25) engage l'autre évidement-de-verrouillage (16) du montant (2).

6. Dispositif-de-couplage-automatique-de-chargeur-frontal (23) pour un couplage automatique d'un chargeur-frontal (1) avec un véhicule-de-travail, notamment avec un procédé selon l'une des revendications 1 à 5, comprenant une console-d'attelage (33) du véhicule-de-travail avec deux logements-de-console (52, 53), au moins un logement-de-console (52 ; 53) étant ouvert dans la direction-de-marche (14),
**caractérisé par**
a) un élément-de-verrouillage (24) conçu comme boulon-de-verrouillage (26) de la console-d'attelage (33) du véhicule-de-travail, qui est guidé de manière coulissante dans une direction transversale à la direction-de-marche (14), et
b) un actionneur (28), par lequel l'élément-de-verrouillage (24) est déplaçable depuis la position non verrouillée vers la position-verrouillée,
de préférence avec un dispositif-de-couplage-de-conduites (32) électrique et/ou hydraulique, lequel présente des contacts électriques et/ou hydrauliques (40, 41) qui sont supportés avec un degré-de-liberté-longitudinal (45), un degré-de-liberté-transversal (46) et/ou un degré-de-liberté-de-pivotement (47).

7. Dispositif-de-couplage-de-chargeur-frontal (23) selon la revendication 6, dans lequel l'actionneur (28) est un actionneur hydraulique (en particulier vérin-hydraulique 30) et un corps-de-cylindre (60) déplacé hydrauliquement ou un piston (61) déplacé hydrauliquement de l'actionneur hydraulique forme l'élément-de-verrouillage (24).

8. Dispositif-de-couplage-de-chargeur-frontal (23) selon la revendication 6 ou 7, dans lequel la console-d'attelage (33) et/ou le montant (2) présente/présentent au moins une rampe-d'introduction (37).

9. Dispositif-de-couplage-de-chargeur-frontal (23) selon l'une des revendications 6 à 8, dans lequel au moins un capteur ou interrupteur est présent, lequel détecte une position-relative entre le montant (2) et la console-d'attelage (33).

10. Véhicule-de-travail avec un dispositif-de-couplage-de-chargeur-frontal (23) selon l'une des revendications 6 à 9.

11. Système-de-véhicule-de-travail avec un véhicule-de-travail selon la revendication 10, sur lequel un chargeur-frontal (1) est maintenu via le dispositif-de-couplage-de-chargeur-frontal (23).
